# FASCICULE DE BREVET EUROPEEN

(11) **EP 4 268 128 B1**
(45) Date de publication et mention de la délivrance du brevet: **30.10.2024**
(21) Numéro de dépôt: 21851685.4
(22) Date de dépôt: 16.12.2021
(51) Int. Cl.: G06K 19/06, G06F 16/955, G06K 17/00, G06K 19/08

(54) **ARTICLE IMPRIMÉ INTERACTIF**
INTERAKTIVES DRUCKERZEUGNIS
INTERACTIVE PRINTED ITEM

(30) Priorité: 22.12.2020 FR 2013983
(43) Date de publication de la demande: 01.11.2023
(73) Titulaire: Visocchi, Giulia Maria Diomira, 59000 Lille (FR)
(72) Inventeur: VISOCCHI, Giulia Maria Diomira, 59000 Lille (FR); VISOCCHI, Giulia Maria Diomira, 59000 Lille (FR)
(74) Mandataire: Ex Materia
(86) Numéro de dépôt international: PCT/FR2021/052372
(87) Numéro de publication internationale: WO 2022/136774

(56) Documents cités:
- EP-A1- 2 731 057
- KR-A- 20120 113 336
- MAJCEN SAMUEL: "Maya Angelou - QR Code by Samuel Majcen", 24 July 2014 (2014-07-24), XP055839197, Retrieved from the Internet <URL:https://samuel-majcen.pixels.com/featured/maya-angelou-qr-code-samuel-majcen.html> [retrieved on 20210908]
- MARCOTT AMY: "Interior Decorating with...QR Codes | alum.mit.edu", 19 July 2011 (2011-07-19), XP055839549, Retrieved from the Internet <URL:https://alum.mit.edu/slice/interior-decorating-withqr-codes> [retrieved on 20210909]

## Description

La présente invention se rapporte à un article imprimé interactif. Elle s'applique particulièrement mais non exclusivement aux domaines de l'art, de la culture et de l'enseignement. Elle concerne également une application logicielle téléchargeable sur un terminal portatif et fonctionnant avec ledit article.

L'accès à l'information de façon générale, et en particulier à l'art et à la culture n'a jamais été aussi facile grâce aux nouvelles technologies de communication. Toute personne peut ainsi aisément faire des recherches sur tout sujet qu'elle souhaite approfondir que ce soit dans le domaine musical, artistique ou autres à partir d'une simple connexion Internet avec un téléphone, une tablette ou un ordinateur. Ceci est particulièrement vrai pour le domaine musical pour lequel de nombreuses plateformes musicales proposent une multitude de titres musicaux de tout registre classique, variétés ou autres.

Toutefois, l'expérience montre qu'en général le temps passé sur l'écran du téléphone, de la tablette ou de l'ordinateur sur la plateforme musicale dépasse largement celui initialement prévu par l'utilisateur, notamment parce que cet accès illimité produit une distraction de l'utilisateur qui au lieu de se concentrer sur sa recherche initiale a tendance à se disperser dans la multitude d'offres que propose Internet.

Par ailleurs, pour le très jeune publie, par exemple les enfants de moins de 6 ans, certains parents se montrent à juste titre hésitants à laisser un accès libre à leur enfant sur une tablette électronique par exemple pour l'écoute de comptines enfantines ou même pour une initiation à la musique classique. I1 a en effet été démontré que l'exposition des jeunes enfants aux écrans des tablettes informatiques peut provoquer des troubles de l'attention, de la concentration et de l'hyperactivité.

Actuellement, les pratiques d'enseignement alternatifs se multiplient et montrent que le jeune enfant doit expérimenter par lui-même, faire ses propres associations culturelles, linguistiques et artistiques en étant de façon souhaitable le plus protégé possible des écrans des tablettes interactives qui accaparent son attention et détournent l'enfant de l'objectif initial de sa sensibilisation au monde artistique et particulièrement à la musique classique.

Les URL suivantes décrivent des oeuvres décoratives basées sur l'emploi de OR-codes:

https://samuel-majcen.pixels.com/featured/maya-angelou-qr-code-samuel-majcen.html

https://alum.mit.edu/slice/interior-decorating-withqr-codes

La demande de brevet européen EP2731057 A1 décrit une image avec des informations visibles codées à l'intérieur.

L'invention a notamment pour but de proposer un nouvel article imprimé à la fois interactif et décoratif qui apporte une nouvelle approche pour l'accès à l'information.

A cet effet, l'invention a pour objet un article interactif décoratif et imprimé comprenant un substrat et une image imprimée sur ce substrat, caractérisé en ce que l'image comprend au moins un élément graphique pixellisé formé par une mosaïque de pixels élémentaires juxtaposés apparaissant à 1'œil nu comme des pixels isolés, chaque pixel ayant une forme générale géométrique comprenant une matrice bidimensionnelle codant une chaîne de caractères sous la forme d'aires contrastées sombres et non sombres et en ce que la chaîne de caractères forme un lien vers une base de données multimédia et est configurée pour être identifiée par un dispositif de lecture de matrice bidimensionnelle.

Au sens de la présente invention, on entend par le terme « pixel », une cellule unitaire composant l'image.

Grâce à l'invention, l'article imprimé interactif permet de créer une passerelle esthétique entre une offre de contenus multimédia proposés par exemple par Internet et l'utilisateur tout en limitant l'utilisation d'écrans électroniques puisque l'usage du terminal portatif est limité à une lecture ou un « scan » d'un pixel matriciel,

L'article imprimé forme ainsi une bibliothèque de contenus multimédias accessibles avec un téléphone portable classique ou bien avec un objet connecté dédié à cette application qui permettrait la lecture des pixels matriciels.

La pixellisation de l'élément graphique produit également un effet très esthétique car l'alternance d'aires contrastées sombres et non sombres dans chaque pixel créée un résultat très aéré, évoquant les pointillés du courant de peinture « impressionniste ».

Un dispositif selon l'invention peut comporter l' une ou plusieurs des caractéristiques suivantes.

Dans un mode de réalisation préféré de l'invention, la mosaïque comprend des matrices de pixels fractionnées ou des matrices de pixels présentant un changement de couleur des aires contrastées pour démarquer un contour de délimitation intérieur et/ou extérieur de la forme de l'élément graphique.

Dans un mode de réalisation préféré de l'invention, la mosaïque de pixels comprend des pixels entiers interactifs et des fractions de pixels non interactifs, ces fractions de pixels non interactifs étant conformées pour détourer intérieurement et/ou extérieurement l'élément graphique d'un arrière-plan de l'image.

Dans un mode de réalisation préféré de l'invention, la mosaïque comprend au moins un pixel polychrome présentant une démarcation de changement de couleur de ses aires contrastées pour détourer intérieurement et/ou extérieurement l'élément graphique d'un arrière-plan de l'image .

Dans un mode de réalisation préféré de l'invention, la mosaïque de pixels comprend des fractions de pixels et des pixels entiers pour détourer intérieurement et/ou extérieurement l'élément graphique selon des profils non rectilignes, par exemple un profil curviligne. Ceci permet de créer de former des éléments graphiques complexes avec des contours irréguliers, curvilignes.

Dans un mode de réalisation préféré de l'invention, la mosaïque comprend au moins un pixel polychrome, non exclusivement en noir et blanc.

Dans un autre mode de réalisation de l'invention, l'élément graphique est un dessin, un caractère typographique, une photographie, un portrait, un dessin d'animal, un dessin de végétal un dessin de décor de salle de spectacle, un dessin d'instrument de musique, une association de couleurs ou tout autre graphisme.

Dans un autre mode de réalisation de l'invention, la mosaïque comprend des bandes de jointures des pixels entre eux non sombres s'étendant entre les pixels élémentaires pour les isoler visuellement les uns des autres. Par exemple, ces bandes quadrillent la mosaïque entre les pixels ce qui permet de détacher chaque pixel les uns des autres.

Dans un mode de réalisation préféré, le substrat est un papier-peint, une affiche en carton ou en papier ou en matière synthétique, une décalcomanie murale, un autocollant repositionnable.

Dans un autre mode de réalisation, l'élément graphique pixellisé est obtenu par application d'un calque de fusion sur une planche de matrices bidimensionnelles, une zone du calque correspondant à l'élément graphique est rendue transparente de sorte que la planche de matrices est visible.

Dans un autre mode de réalisation de l'invention, chaque matrice comprend une forme générale carrée avec trois motifs de détection de la matrice localisés aux trois des quatre coins de la matrice et une zone de données centrales formée par une répartition unique de ses aires sombres et non sombres et codant ladite chaîne de caractères, en particulier de type QR code.

Dans un autre mode de réalisation de l'invention, l'article imprimé est un jeu de probabilité ayant une pluralité de pièces de jeu comprenant une pluralité de pièces de jeu gagnants et une pluralité de pièces de jeu perdants, les pièces de jeu étant formés par les pixels de la mosaïque de l'élément graphique, le résultat du jeu étant contrôlé par les lois de la probabilité grâce à des choix faits par le joueur en ce qui concerne la sélection de pièces de jeu à découvrir.

L'invention concerne encore un module logiciel sur un support de données pour la lecture de matrice de codage bidimensionnelle, en particulier code « QR », comprise dans un article selon l'invention, le dit module logiciel étant chargeable dans un module de stockage de données d'un terminal portatif comprenant une caméra et une sortie audio et/ou visuelle, caractérisé en ce que le module logiciel comprend des instructions logicielles configurées pour être exécutées sur ledit terminal portatif :

Les instructions comprennent les étapes d'acquisition avec la caméra d'une image brute d'une zone de la mosaïque de pixels l'élément graphique et de sélection d'un unique pixel matriciel de l'image à l'intérieur de la mosaïque de pixels, de lecture de la chaîne de caractères du code associé au pixel matriciel unique sélectionné et de génération d'un contenu audio ou visuel de la base de données multimédia, associé à la chaîne de caractères.

L'invention a enfin pour objet un terminal portatif comprenant une caméra et une sortie audio et/ou visuelle, caractérisé en ce qu'il comprend un module de stockage du module logiciel selon l'invention.

D'autres caractéristiques et avantages de l'invention apparaîtront à la lumière de la description qui suit, faite en référence aux dessins annexés dans lesquels :
[fig.1] : la [fig.1] illustre une première application d'un article décoratif selon l'invention installé dans une pièce à vivre d'une habitation ;
[fig.2] : la [fig.2] illustre une vue schématique agrandie de l'article de la [fig.1] ;
[fig.3] : la [fig.3] représente une vue détaillée d'un pixel élémentaire de l'article selon l'invention ;
[fig.4] : la [fig.4] illustre une deuxième application de l'invention ;
[fig.5] : la [fig.5] illustre une troisième application de l'invention ;
[fig.6]: la [fig.6] illustre de façon schématique une étape de transformation d'un élément graphique en un élément graphique pixellisé selon l'invention.

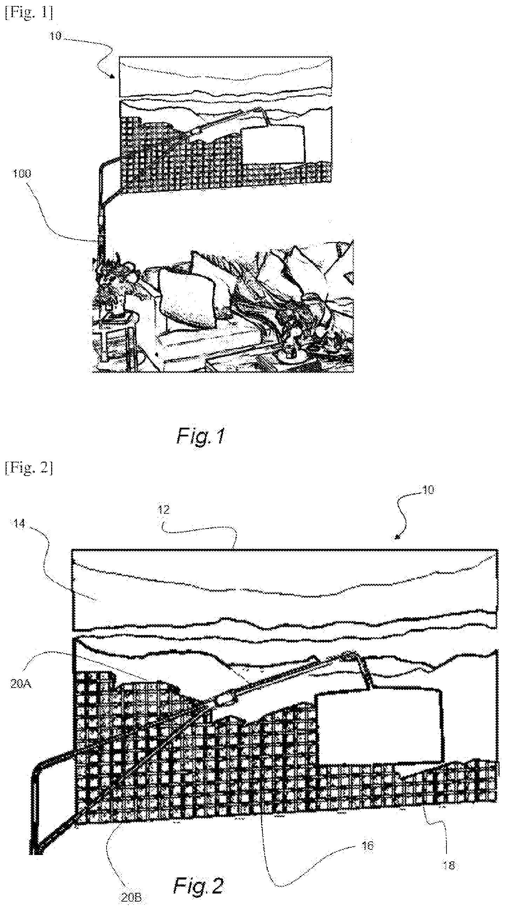

On a représenté sur **les** **figures 1 et 2** un article imprimé interactif selon l'invention. Dans la suite de la description, cet article imprimé porte la référence générale 10. L'article imprimé 10 comprend un substrat 12 et une image imprimée 14 sur le substrat 12. Par impression, on entend toute technique au sens large permettant un marquage graphique sur un substrat 12 avec un contraste suffisant permettant le discernement de motifs et sa lecture par un dispositif de lecture de matrice bidimensionnelle.

Dans cet exemple illustré sur les figures 1 et 2, l'article imprimé 10 comprend un substrat 12. Par exemple, le substrat 12 est un papier de telle sorte que l'article imprimé 10 est un papier-peint ou une affiche positionnée dans une pièce à vivre d'une habitation 100, par exemple dans le cas présent illustré le salon. En variante, le substrat 12 est une affiche en carton ou en papier ou en matière synthétique, une décalcomanie murale, un autocollant repositionnable.

Cet article imprimé 10 comprend une image imprimée 14. Cette image imprimée 14 présente la particularité de l'invention d'être au moins partiellement pixellisée. La pixellisation d'une image a pour effet de rendre apparents de façon marquée les points de l'image, généralement sous forme de points carrés. La pixellisation d'une image est une technique bien connue de traitement d'images et est par exemple notamment utilisée pour flouter des personnes humaines afin de les rendre anonymes, en diminuant localement fortement la résolution de l'image sur les visages humains.

Selon l'invention, l'image 14 comprend au moins un élément graphique 16 pixellisé formé par une mosaïque 18 de pixels éléments juxtaposés 20 apparaissant à l'œil nu comme des pixels isolés.

Chaque pixel 20 a une forme générale géométrique comprenant une matrice bidimensionnelle 30 codant une chaîne de caractères sous la forme d'aires contrastées sombres 22 et non sombres 24.

De préférence, chaque pixel 20 a une forme générale carrée. De préférence, le pixel 20 est une matrice de type QR code (acronyme anglophone pour « Quick Response Code ») et comprend une forme générale carrée avec trois motifs 32 de détection de la matrice 30 localisés aux trois des quatre coins de la matrice 30 et une zone centrale 34 de données formée par une répartition unique de ses aires sombres et non sombres et codant ladite chaîne de caractères.

De préférence, la dimension minimale d'un côté d'un pixel unitaire est supérieure à 10 mm.

En général, dans le cas du code « QR », la taille idéale du pixel est donnée par la formule suivante : Taille du pixel = Distance entre le QR Code et le dispositif de lecture : 10.

Par exemple, pour être lu à trois mètres, le pixel doit avoir un côté de trente-trois centimètres. Dans le cas présent, pour des raisons esthétiques, il peut être souhaitable de diminuer cette dimension entre dix millimètres et cinquante millimètres, et de préférence entre dix millimètres et trente millimètres. Ceci permet de conserver une résolution d'image optimale pour que l'aspect esthétique domine l'aspect technique et fonctionnel.

Par ailleurs, conformément à l'invention, la chaîne de caractères forme un lien vers une base de données multimédia et est configurée pour être identifiée par un dispositif classique de lecture de matrice bidimensionnelle.

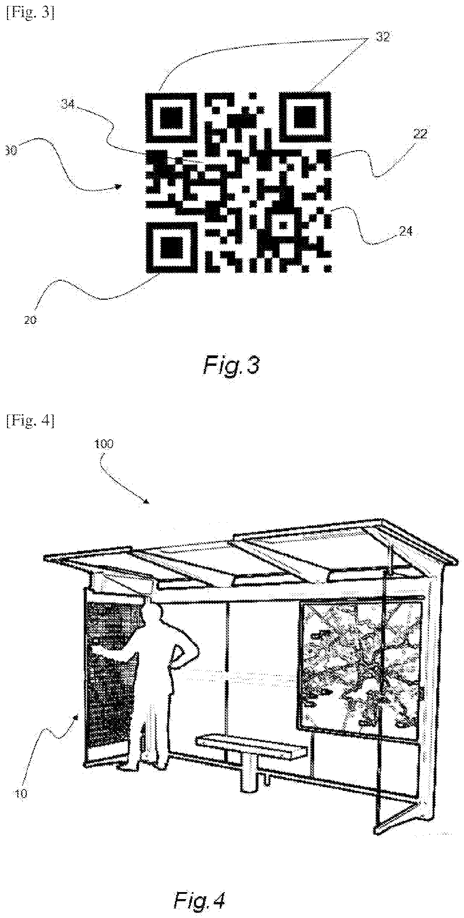

Une telle matrice bidimensionnelle QR code est illustrée en [fig.3]. Cette matrice bidimensionnelle est dans cet exemple une matrice de code QR (conformément à la terminologie « Quick response code »). Une telle matrice comprend une forme générale carrée. Conformément à la norme code QR, chaque matrice 30 comprend une forme générale carrée avec trois motifs 32 de détection de la matrice 30 localisés aux trois des quatre coins de la matrice 30 et la zone centrale 34 de données formée par une répartition unique de ses aires sombres et non sombres et codant ladite chaîne de caractères.

De préférence, le lien est un lien Internet. Par exemple, le lien Internet est un lien Internet court tel qu'un URL de l'anglais « Uniform Resource Locator », littéralement « localisateur uniforme de ressource ») court. La syntaxe des URL est en particulier décrite dans le document « RFC 3986 ». Une URL est une chaîne de caractères combinant les informations nécessaires pour indiq uer à un logiciel comment accéder à une ressource Internet (cas général) par une requête. Une requête (typiquement selon le protocole HTTP : HyperText Transfer Protocol) est un message envoyée par un client vers un serveur et pour lequel il est émis une réponse ; le but du protocole HTTP est de permettre un transfert de fichiers (une ressource ou page Web, typiquement au format HTML : HyperText Markup Language) localisés grâce à son URL entre un navigateur (le client) et un serveur Web. Concernant le format des URL, on se limitera à considérer les éléments suivants : nom de domaine et passage de paramètres au serveur sollicité lors d'une requête par un URL (un lien). Dans l'exemple de l'URL suivant : « www.exemple.com » : le label « com » représente le domaine de premier niveau (générique ou lié à un pays), le label « exemple » représente le domaine de deuxième niveau et le label « www » représente le sous-domaine. Les éléments alphanumériques qui suivent le label « com » permettent soit de spécifier après le caractère spécial « / » le chemin d'accès à la ressource Web demandée et/ou passer des paramètres au serveur sollicité lors de l'activation d'un URL (lancement de la requête) en particulier grâce au caractère spécial « ? ». A noter que dans la requête saisie par un utilisateur avec l'URL « www.exemple.com » le sous domaine « www » peut être absent (rajouté par défaut). La réduction d'URL est une technique utilisée sur Internet qui permet de rendre une page Web accessible par l'intermédiaire d'une courte URL.

En scannant un pixel matriciel 20 « QR Code » à l'aide d' un lecteur de QR code, tel qu'un « smartphone » (terminologie anglophone pour « mobile multifonction », on obtient un accès immédiat au lien Internet associé au pixel matriciel 20. Le lecteur de QR Code peut alors effectuer une action, comme ouvrir le navigateur web à l'URL associé au pixel 20 et ainsi activer le contenu multimédia associé audit lien Internet,

Dans l'exemple illustré sur la [fig. 1] ou 2, l'élément graphique 16 est un dessin de paysage terrestre pixellisé intégré dans un arrière-plan non pixellisé. En variante, l'élément graphique 16 comprend un caractère typographique, une photographie, un portrait, un dessin d'animal, un dessin de végétal un dessin de décor de salle de spectacle, un dessin d'instrument de musique, une association de couleurs ou tout autre graphisme stylisé.

Afin de rendre l'image plus décorative et moins rectiligne géométrique, de préférence, la mosaïque 18 de pixels 20 comprend des fractions de pixels 20A et des pixels entiers 20B pour détourer intérieurement et/ou extérieurement l'élément graphique 16 selon des profils non rectilignes. On voit notamment sur la [fig.2] que l'élément graphique 16 présente un profil de démarcation non rectiligne avec l'arrière-plan. Les fractions de pixels 20A sont non fonctionnelles (non innteractives) et ont uniquement une fonction esthétique,

Par exemple, la mosaïque 18 comprend des matrices 30 de pixels 20A fractionnées ou des matrices 30 de pixels présentent un changement de couleur des aires contrastées pour démarquer un contour de délimitation intérieur et/ou extérieur de la forme de l'élément graphique 16. Les matrices de pixels fractionnées 20A permettent de suivre au plus près un contour curviligne ou irrégulier de l'élément graphique 16A. Les matrices de pixels à changement de couleur permettent de démarquer le contour de l'élément graphique 16 par un changement de couleur,

De préférence, la mosaïque 18 de pixels 20 comprend des pixels entiers interactifs 20B et des fractions de pixels non interactifs 20A, ces fractions de pixels non interactifs étant conformées pour détourer intérieurement et/ou extérieurement l'élément graphique 16 d'un arrière-plan de l'image 14.

De préférence, afin de permettre une diversité de réalisations graphiques tout en permettant de préserver l'aspect fonctionnel des pixels matriciels 20, la mosaïque 18 peut comprendre des matrices 30 de pixel 20 polychromes présentant un changement de couleur dans leurs aires contrastées 22, 24. Il est toutefois nécessaire de conserver un contraste suffisant permettant la lecture du code QR par un dispositif de lecture classique. Par exemple, la matrice de pixels est bicolore ou tricolore, le changement de couleur formant une ligne de démarcation interne délimitant un contour intérieur et/ou extérieur de l'élément graphique 16.

Par ailleurs, la mosaïque 18 comprend des bandes 26 de jointure des pixels 20 non sombres s'étendant entre les pixels élémentaires 20 pour les isoler visuellement les uns des autres. Par exemple, la bande de jointure 26 a une largeur comprise entre un quart et un dixième de la dimension d'un côté du pixel 20.

De préférence, la dimension minimale d'un côté d'un pixel unitaire est supérieure à dix millimètres, par exemple supérieure à vingt-cinq millimètres.

Dans la troisième application illustrée sur la [fig.4], l'article imprimé 10 se présente sous la forme d'une affiche publicitaire incorporant un jeu de probabilité. Dans le cas présent, il s'agit d'une affiche au format « Abribus » : 120 x 176 centimètres. C'est un format type du mobilier urbain, comme les abris bus. L'affiche 10 est dans l'exemple entièrement pixellisée, avec des pixels 20 de vingt-cinq millimètres de côté. L'affiche 10 comprend plus de trois mille pixels entiers 20.

Dans cet exemple, ce jeu comprend une pluralité de pièces de jeu avec au moins une pièce de jeu « gagnant » et une pluralité de pièces de jeu « perdants ». Avantageusement, les pièces de jeu sont formés par les trois mille pixels entiers 20 de la mosaïque 18 de l'élément graphique 16. Le résultat du jeu est contrôlé par les lois de la probabilité grâce à des choix faits par le joueur en ce qui concerne la sélection des pièces de jeu à découvrir. Par exemple, pour un même identifiant du joueur (adresse e-mai l, numéro de téléphone), le nombre de pièces de jeu 20 à découvrir est limité à trois pour une durée déterminée.

Le joueur attend son bus et peut en même temps tenter sa chance au jeu proposé par l'affiche 10. Par exemple, le joueur scanne un pixel 20 avec son mobile multifonction. Le lien Internet associé au pixel 20 peut être gagnant ou perdant. Par exemple, dans le cas du pixel gagnant, une page indiquant le lot gagné s'affiche instantanément sur l'écran de son mobile multifonction.

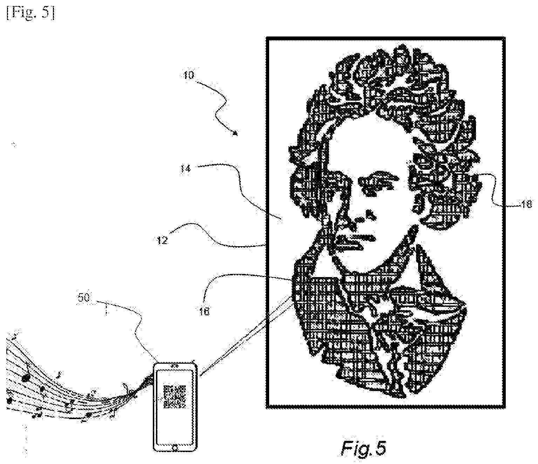

Comme cela est illustré en [fig.5], l'article imprimé 10, ici un portrait de musicien célèbre, selon l'invention peut être lu par un téléphone portatif classique 50 comprenant une caméra. L'utilisateur pourra utiliser un module logiciel spécifique facilitant l'analyse du code bidimensionnel sur l'article imprimé et la restitution d'un contenu multimédia par le terminal mobile 50.

A cet effet, l'invention concerne également un module logiciel sur un support de données pour la lecture de matrice de codage bidimensionnelle, en particulier code « QR », et chargeable dans un module de stockage de données d'un terminal portatif comprenant une caméra et une sortie audio et/ou visuelle, caractérisé en ce que le module logiciel comprend des instructions logicielles configurées pour être exécutées sur ledit terminal portatif. Ces instructions logicielles comprennent une instruction d'acquisition avec la caméra d'une image brute d'une zone pixellisée de l'élément graphique et de sélection d'un unique pixel matriciel de l'image brute à l'intérieur de la mosaïque de pixels. Cette opération de sélection est très spécifique au module logiciel de l'invention puisqu'elle permet l'adaptabilité du terminal portatif à l'article imprimé interactif.

Le module logiciel comprend encore des instructions logicielles de lecture de la chaîne de caractères du code associé au pixel matriciel unique sélectionné et de génération d'un contenu audio ou visuel de la base de données multimédia, associé à la chaîne de caractères.

En variante, le terminal portatif, par exemple une liseuse, une enceinte, ou toute autre tablette électronique comprend une caméra et une sortie audio et/ou visuelle. Le terminal portatif 50 comprend de façon classique une caméra et une sortie audio et/ou visuelle, un module de stockage de données et un processeur. Le module de stockage comprend le module logiciel décrit ci-dessus. Par exemple, les instructions logicielles sus-décrites ont été mises en oeuvre, sur un téléphone intelligent fonctionnant sous environnement Android^{™}, et à l'aide d'un logiciel s'appuyant sur une librairie de traitement d'images, tel que OpenCV^{™}.

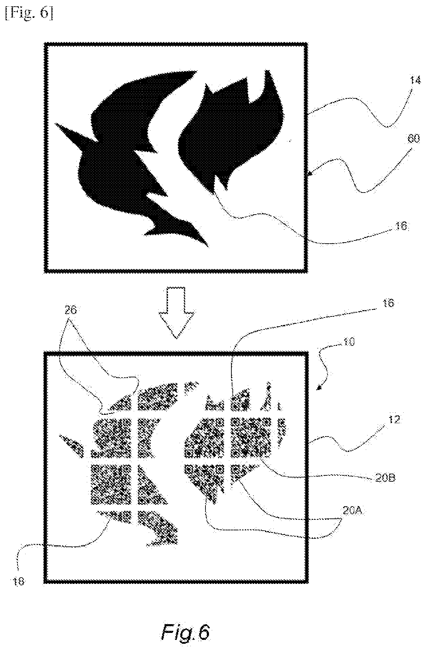

On a représenté de façon schématique sur la [fig.6] les étapes de transformation d'une image en un article imprimé selon l'invention. Tout d'abord, on prépare un masque 60 dit de calque ou de fusion représentant l'élément graphique 16 et on préparer une planche mosaïque de pixels de matrices « QR code » (non représentée). Le masque 60 est superposé sur la planche ce qui permet au moyen de traitement d'images classique d'obtenir l'élément graphique pixellisé. Ainsi, le masque de calque ou de fusion permet de définit quelles zones de l'image 14 sont opaques, semitransparentes ou transparentes. La zone de l'élément graphique 16 est définie comme étant transparente de sorte que la planche de matrices QR est visible par transparence. Le pourtour de l'élément graphique 16 est rendu opaque de sorte que la planche de matrices « QR code » est invisible.

On va maintenant décrire les principaux aspects de fonctionnement d'un article imprimé selon l'invention.

L'utilisateur, par exemple un enfant, utilise un objet dédié connecté au réseau Internet permettant de scanner des QR codes. Cet objet dédié se présentant par exemple sous forme d'un jouet comprend un lecteur de QR codes et une sortie audio. L'enfant approche l'objet connecté de l'article imprimé par exemple une affiche illustrant l'œuvre musicale « le carnaval des animaux » dans laquelle chaque animal représenté est pixellisé selon l'invention. L'enfant choisit un animal (élément graphique) et appuie sur un bouton de l'objet connecté permettant le scan d'un pixel matriciel de l'animal. Le thème musical associé à l'animal est alors joué par l'objet connecté.

Bien entendu, toutes sortes d'applications peuvent être imaginées pour cet article imprimé et elles ne sauraient être limitées à celles décrites dans cette présente demande de brevet.

L'invention ne se limite pas aux modes de réalisation précédemment décrits. D'autres modes de réalisation à la portée de l'homme du métier peuvent aussi être envisagés sans sortir du cadre de l'invention définie par les revendications ci-après. C'est ainsi, notamment que l'on ne s'éloignerait pas du cadre de l'invention en modifiant la nature du substrat ou la forme de l'élément graphique ou encore la technique d'impression de l'image.

## Revendications

1. Article (10) interactif décoratif et imprimé comprenant un substrat (12) et une image (14) imprimée sur ce substrat (12), **caractérisé en ce que** l'image (14) comprend au moins un élément graphique (16) pixellisé formé par une mosaïque (18) de pixels élémentaires juxtaposés (20) apparaissant à l'oeil nu comme des pixels isolés (20), chaque pixel (20) ayant une forme générale géométrique comprenant une matrice bidimensionnelle codant une chaîne de caractères sous la forme d'aires contrastées sombres (22) et non sombres (24) **et en ce que** la chaîne de caractères est un lien vers une base de données multimédia.

2. Article (10) selon la revendication précédente, dans lequel la mosaïque (18) comprend des matrices (30) de pixels (20A) fractionnées ou des matrices (30) de pixels présentant un changement de couleur des aires contrastées pour démarquer un contour de délimitation intérieur et/ou extérieur de la forme de l'élément graphique (16).

3. Article (10) selon l'une quelconque des revendications précédentes, dans lequel l'élément graphique (16) pixellisé est obtenu par application d'un calque de fusion sur une planche de matrices bidiemnsionnelles, une zone du calque correspondant à l'élément graphique est rendue transparente de sorte que la planche de matrices est visible.

4. Article (10) selon l'une quelconque des revendications précédentes, dans lequel la mosaïque (18) de pixels (20) comprend des pixels entiers interactifs (20B) et des fractions de pixels non interactifs (20A), ces fractions de pixels non interactifs étant conformées pour détourer intérieurement et/ou extérieurement l'élément graphique (16) d'un arrière-plan de l'image (14).

5. Article (10) selon l'une quelconque des revendications précédentes, dans lequel la mosaïque (18) comprend au moins un pixel (20) polychrome présentant une démarcation de changement de couleur de ses aires contrastées (22, 24) pour détourer intérieurement et/ou extérieurement l'élément graphique (16) d'un arrière-plan de l'image (14) .

6. Article (10) selon l'une quelconque des revendications précédentes, dans lequel l'élément graphique (16) est un dessin, un caractère typographique, une photographie, un portrait, un dessin d'animal, un dessin de végétal un dessin de décor de salle de spectacle, un dessin d'instrument de musique, une association de couleurs.

7. Article (10) selon l'une quelconque des revendications précédentes, dans lequel la mosaïque (18) comprend des bandes (26) de jointures des pixels (20) entre eux non sombres s'étendant entre les pixels élémentaires (20) pour les isoler visuellement les uns des autres.

8. Article (10) selon l'une quelconque des revendications précédentes, dans lequel la dimension minimale d'un pixel unitaire est supérieure à 10 millimètres et inférieure à 50 millimètres.

9. Article (10) selon l'une quelconque des revendications précédentes, dans lequel le substrat (12) est un papier-peint, une affiche en carton ou en papier ou en matière synthétique, une décalcomanie murale, un autocollant repositionnable.

10. Article (10) selon l'une quelconque des revendications précédentes, dans lequel chaque matrice (30) comprend une forme générale carrée avec trois motifs (32) de détection de la matrice (30) localisés aux trois des quatre coins de la matrice (30) et une zone centrale (34) de données formée par une répartition unique de ses aires sombres et non sombres et codant ladite chaîne de caractères, en particulier de type QR code.

11. Article imprimé (10) selon l'une quelconque des revendications précédentes, étant un jeu de probabilité ayant une pluralité de pièces de jeu comprenant au moins une pièce de jeu « gagnant » et une pluralité de pièces de jeu « perdants », les pièces de jeu étant formés par les pixels (20) de la mosaïque (18) de l'élément graphique (16), le résultat du jeu étant contrôlé par les lois de la probabilité grâce à des choix faits par le joueur en ce qui concerne la sélection de pièces de jeu à découvrir.

12. Module logiciel sur un support de données pour la lecture de matrice de codage bidimensionnelle, en particulier code « QR », comprise dans un article (10) selon l'une quelconque des revendications précédentes, le dit module logiciel étant chargeable dans un module de stockage de données d'un terminal portatif comprenant une caméra et une sortie audio et/ou visuelle, **caractérisé en ce que** le module logiciel comprend des instructions logicielles configurées pour être exécutées sur ledit terminal portatif :
- d'acquisition avec la caméra d'une image brute d'une zone pixellisée de l'élément graphique et de sélection d'un unique pixel matriciel de l'image à l'intérieur de la mosaïque (18) de pixels (20),
- de lecture de la chaîne de caractères du code associé au pixel matriciel unique sélectionné et de génération d'un contenu audio ou visuel de la base de données multimédia, associé à la chaîne de caractères.

13. Terminal portatif (50) comprenant une caméra et une sortie audio et/ou visuelle, **caractérisé en ce qu'**il comprend un module de stockage du module logiciel selon la revendication précédente.

## Patentansprüche

1. Dekorativer und bedruckter interaktiver Artikel (10), umfassend ein Substrat (12) und ein auf diesem Substrat (12) bedrucktes Bild (14), **dadurch gekennzeichnet, dass** das Bild (14) mindestens ein pixeliges grafisches Element (16) umfasst, das aus einem Mosaik (18) aus aneinander angrenzenden Elementarpixeln (20) besteht, die mit bloßem Auge als isolierte Pixel (20) erscheinen, wobei jedes Pixel (20) eine allgemeine geometrische Form aufweist, die eine zweidimensionale Matrix umfasst, die eine Zeichenfolge in Form eines dunkle (22) und nichtdunkle (24) kontrastierende Bereiche kodiert und dass die Zeichenfolge ein Link zu einer Multimedia-Datenbank ist.

2. Artikel (10) nach dem vorhergehenden Anspruch, bei dem das Mosaik (18) Matrizen (30) aus geteilten Pixeln (20A) oder Matrizen (30) aus Pixeln umfasst, die eine Farbänderung der kontrastierenden Bereiche darstellen, um eine innere und/oder äußere Begrenzungskontur der Form des grafischen Elements (16) abzugrenzen.

3. Artikel (10) nach einem der vorhergehenden Ansprüche, bei dem das pixeliege grafische Element (16) durch Aufbringen einer Fusionsschicht auf ein Blatt zweidimensionaler Matrizen erhalten wird, wobei ein Bereich der Schicht, der dem grafischen Element entspricht, wird transparent gemacht, sodass das Matrizen blatt sichtbar ist.

4. Artikel (10) nach einem der vorhergehenden Ansprüche, bei dem das Mosaik (18) von Pixeln (20) interaktive ganze Pixel (20B) und nicht interaktiver Pixelteile (20A) umfasst, wobei diese nicht interaktiv Pixelteil geformt sind, um das grafische Element (16) innen und/oder außen aus einem Hintergrund des Bildes (14) auszuschneiden.

5. Artikel (10) nach einem der vorhergehenden Ansprüche, bei dem das Mosaik (18) mindestens ein polychromes Pixel (20) umfasst, das eine Farbänderungsmarkierung seiner kontrastierenden Bereiche (22, 24) aufweist, um das grafische Element (16) eines Hintergrunds des Bildes (14) auszuschneiden.

6. Artikel (10) nach einem der vorhergehenden Ansprüche, bei dem das grafische Element (16) eine Zeichnung, ein typografisches Zeichen, ein Foto, ein Porträt, eine Tierzeichnung, eine Pflanzenzeichnung, eine Zeichnung einer Theaterdekoration, eine Zeichnung eines Musikinstruments, eine Farbassoziation ist.

7. Artikel (10) nach einem der vorhergehenden Ansprüche, bei dem das Mosaik (18) Streifen (26) von Verbindungen den nichtdunklen Pixeln (20) umfasst, die sich zwischen den Elementarpixeln (20) erstrecken, um diese optisch zu isolieren voneinander.

8. Artikel (10) nach einem der vorhergehenden Ansprüche, bei dem die Mindestabmessung eines Einheitspixels größer als 10 Millimeter und kleiner als 50 Millimeter ist.

9. Artikel (10) nach einem der vorhergehenden Ansprüche, bei dem das Substrat (12) eine Tapete, ein Poster aus Pappe oder Papier oder synthetischem Material, ein Wandtattoo, ein repositionierbarer Aufkleber ist.

10. Artikel (10) nach einem der vorhergehenden Ansprüche, bei dem jede Matrix (30) eine im Allgemeinen quadratische Form mit drei Mustern (32) zur Erkennung der Matrix (30) aufweist, die sich an drei der vier Ecken der Matrix befinden (30), und einen zentralen Datenbereich (34), der durch eine eindeutige Verteilung seiner dunklen und nichtdunklen Bereiche gebildet wird und die Zeichenfolge, insbesondere vom Typ QR-Code, kodiert.

11. Gedruckter Artikel (10) nach einem der vorhergehenden Ansprüche, bei dem es sich um ein Wahrscheinlichkeitsspiel mit mehreren Spielfiguren handelt, das mindestens eine "Gewinner"-Spielfigur und eine Mehrzahl von "Verlierer"-Spielfiguren umfasst, wobei die Spielfiguren gebildet werden durch die Pixel (20) des Mosaiks (18) des grafischen Elements (16), wobei der Ausgang des Spiels durch die Wahrscheinlichkeitsgesetze durch Entscheidungen des Spielers hinsichtlich der Auswahl der zu entdeckenden Spielsteine gesteuert wird.

12. Softwaremodul auf einem Datenträger zum Lesen des Artikels (10) nach einem der vorhergehenden Ansprüche, umfassend mindestens eine in einem Artikel (10) nach einem der vorhergehenden Ansprüche enthaltene zweidimensionale Codierungsmatrix, insbesondere "QR"-Code, wobei das Softwaremodul in ein Datenspeichermodul eines tragbaren Terminals ladbar ist, das eine Kamera und einen Audio- und/oder visuellen Ausgang umfasst, **dadurch gekennzeichnet, dass** das Softwaremodul Softwareanweisungen umfasst, die so konfiguriert sind, dass sie auf dem tragbaren Terminal ausgeführt werden:
- Erfassung eines Rohbildes eines pixelierten Bereichs des grafischen Elements (16) mit der Kamera und Auswahl eines einzelnen Matrixpixels (20) des Bildes (14) innerhalb des Mosaiks (18) von Pixeln (20),
- Lesen der Zeichenfolge des Codes, der dem ausgewählten einzelnen Matrixpixel (20) zugeordnet ist, und Erzeugen von Audio- oder visuellen Inhalten der Multimedia-Datenbank, die der Zeichenfolge zugeordnet sind.

13. Tragbares Terminal (50), umfassend eine Kamera und eine Audio- und/oder visuelle Ausgang, **dadurch gekennzeichnet, dass** es ein Speichermodul des Softwaremoduls nach dem vorhergehenden Anspruch umfasst.

## Claims

1. An interactive decorative printed article (10) comprising a substrate (12) and an image (14) printed on said substrate (12), **characterized in that** said image (14) comprises at least one pixelated graphic element (16) formed by a mosaic (18) of juxtaposed elementary pixels (20) appearing to the naked eye as isolated pixels (20), each pixel (20) having a general geometric shape comprising a two-dimensional matrix encoding a character string in the form of contrasting dark areas (22) and contrasting non-dark areas (24) and **in that** the character string is a link to a multimedia database.

2. Article (10) according to the preceding claim, wherein the mosaic (18) comprises split arrays (30) of pixels (20A) or arrays (30) of pixels exhibiting a change in color of the contrasting areas to map an inner and/or outer delimiting contour of the shape of the graphic element (16).

3. Article (10) according to any of the preceding claims, wherein the pixelated graphic element (16) is obtained by applying a fusion layer to a two-dimensional matrix plate, an area of the layer corresponding to the graphic element is made transparent so that the matrix plate is visible.

4. Article (10) according to any one of the preceding claims, wherein the mosaic (18) of pixels (20) comprises interactive full pixels (20B) and non-interactive pixel fractions (20A), said non-interactive pixel fractions being shaped to internally and/or externally crop the graphic element (16) from a background of the image (14).

5. Article (10) according to any one of the preceding claims, wherein the mosaic (18) comprises at least one polychromatic pixel (20) having a color change demarcation of its contrasting areas (22, 24) for internally and/or externally croping the graphic element (16) from a background of the image (14).

6. Article (10) according to any of the preceding claims, in which the graphic element (16) is a drawing, a typographic character, a photograph, a portrait, an animal drawing, a plant drawing, a drawing of a theatre set, a drawing of a musical instrument, a combination of colors.

7. Article (10) according to any one of the preceding claims, wherein the mosaic (18) comprises non-dark pixel (20) joint strips (26) extending between the elementary pixels (20) to visually isolate them from one another.

8. Article (10) according to any of the preceding claims, wherein the minimum dimension of a unit pixel is greater than 10 millimeters and less than 50 millimeters.

9. Article (10) according to any of the preceding claims, in which the substrate (12) is a wallpaper, a cardboard or paper or synthetic poster, a wall decal, a repositionable sticker.

10. Article (10) according to any one of the preceding claims, wherein each matrix (30) comprises a generally square shape with three detection patterns (32) of the matrix (30) located at three of the four corners of the matrix (30) and a central data zone (34) formed by a unique distribution of its dark and non-dark areas and encoding said character string, in particular of QR code type.

11. Article (10) printed according to any of the preceding claims, being a probability game having a plurality of game pieces comprising at least one "winner" game piece and a plurality of "loser" game pieces, the game pieces being formed by the pixels (20) of the mosaic (18) of the graphic element (16), the result of the game being controlled by the laws of probability thanks to choices made by the player with regard to the selection of game pieces to be discovered.

12. Software module on a data carrier for reading the article (10) according to any of the preceding claims comprising at least one two-dimensional coding matrix, in particular "QR" code, included in an article (10) according to any of the preceding claims, said software module being loadable into a data storage module of a portable terminal comprising a camera and an audio and/or visual output, **characterized in that** the software module comprises software instructions configured to be executed on said portable terminal:
- acquiring with the camera a raw image of a pixelated area of the graphic element (16) and selecting a single matrix pixel (20) of the image (14) within the mosaic (18) of pixels (20),
- reading the character string of the code associated with the selected single matrix pixel (20) and generating audio or visual content from the multimedia database, associated with the character string.

13. Portable terminal (50) comprising a camera and an audio and/or visual output, **characterized in that** it comprises a storage module for the software module according to the preceding claim.
